# EUROPÄISCHE PATENTSCHRIFT

(11) **EP 2 027 685 B1**
(45) Veröffentlichungstag und Bekanntmachung des Hinweises auf die Patenterteilung: **13.07.2011**
(21) Anmeldenummer: 07725388.8
(22) Anmeldetag: 19.05.2007
(51) Int. Cl.: H04L 12/58

(54) **VERFAHREN ZUR STEUERUNG UND BENUTZERSPEZIFISCHEN ANPASSUNG EINES MULTIMEDIA MESSAGING DIENSTES**
METHOD FOR THE CONTROL AND USER-SPECIFIC ADAPTATION OF A MULTIMEDIA MESSAGING SERVICE
PROCÉDÉ POUR LA COMMANDE ET L'ADAPTATION, SPÉCIFIQUE À L'UTILISATEUR, D'UN SERVICE DE MESSAGERIE MULTIMÉDIA

(30) Priorität: 24.05.2006 DE 102006024314
(43) Veröffentlichungstag der Anmeldung: 25.02.2009
(73) Patentinhaber: T-Mobile International AG, 53227 Bonn (DE)
(72) Erfinder: RÖBKE, Matthias, 50859 Köln (DE)
(74) Vertreter: Riebling, Peter
(86) Internationale Anmeldenummer: PCT/EP2007/004480
(87) Internationale Veröffentlichungsnummer: WO 2007/134821

(56) Entgegenhaltungen:
- US-A1- 2004 057 403
- ETSI TR 102 314-6 V1.1.2: "Fixed network Multimedia Messaging Service (F-MMS); Part 6: Control strings (service codes) for MMS functions and MMS supplementary services" EUROPEAN TELECOMMUNICATIONS STANDARDS INSTITUTE, Dezember 2004 (2004-12), XP014027131
- ETSI TR 102 314-7 V1.1.2: "Fixed network Multimedia Messaging Service (F-MMS); Part 7: Over-The-Line configuration of F-MMS terminal settings" EUROPEAN TELECOMMUNICATIONS STANDARDS INSTITUTE, März 2005 (2005-03), XP014027331

## Beschreibung

Die vorliegende Erfindung betrifft generell das Gebiet der Mobilkommunikation und insbesondere ein Verfahren zur Steuerung und Anpassung eines Multimedia Messaging Dienstes, wie er insbesondere in GSM Mobilfunksystemen angeboten wird.

In der Mobilfunktechnologie ist es möglich mit Hilfe des Multimedia Messaging Services, kurz: MMS, Daten zu übertragen (Bild, Ton, Video etc.). MMS ist ein Mitteilungsdienst für mobile Geräte, z. B. Mobiltelefone und Smartphones. Als Nachfolgedienst des Short Message Service (SMS) soll MMS Nachrichten mit Multimedia-Inhalten in den Mobilfunknetzen übertragen. Innerhalb des Mobilfunknetzes handelt es sich bei MMS um eine einfache Datenübertragung. SMS und MMS sind sehr ähnlich aufgebaut. Der Unterschied liegt im Informationsgehalt und der Trägertechnik. Während eine SMS bis zu 160 Zeichen lang ist, liegt die Länge von MMS Nachrichten bei mehreren kByte. Zur Übertragung in den Mobilfunknetzen greift MMS auf WAP (Wireless Application Protocol) zurück. Durch WAP wird die Nutzung von MMS unabhängig von der Mobilfunktechnik als Übertragungsmedium. Mit WAP kann MMS die Funkstrecke von GPRS, HSCSD, EDGE und UMTS nutzen. MMS ist vom WAP-Forum und dem 3rd Generation Partnership Projects (3GPP) standardisiert. Die hierfür zu Grunde liegende Technik ist in den Publikationen von 3GPP TS 22140 v6.10.0, 3GPP 23.140 v6.M.M sowie in den Publikationen der OpenMobileAlliance beschrieben.

Heutige Multimedia Messaging Systeme umfassen in der Regel ein MMS-Center mit einem MMS-Relay Server, der über eine Vielzahl von Schnittstellen mit anderen MMS-Servern, Email Servern, Netzelementen des Mobilfunks (z.B. Heimatregister HLR), usw. kommuniziert.

Die MMS-fähigen Endgeräte, sowohl mobile als auch "feste" Endgeräte, können sehr verschiedene Eigenschaften haben. Sie haben verschiedene Bildschirmauflösungen, unterstützen unterschiedliche Multimedia-Formate, können über verschiedene Träger kommunizieren, usw. Wegen diesen Unterschieden muss oft ein so genanntes Transcoding angewandt werden, um ein Format in ein anderes umzuwandeln, das vom empfangenden Gerät dargestellt werden kann. Ein im Endgerät vorgesehener MMS-Client sorgt dafür, dass der Anwender diese Möglichkeiten auch nutzen kann.

In der heutigen Ausprägung des MMS Services sind Steuermechanismen für eine benutzerspezifische Beeinflussung des Multimedia Messaging Services vorgesehen, die auf der Übermittlung eines Servicecodes basieren. Beschieben sind diese Steuermechanismen in der technischen Spezifikation ETSI TR 102 314-6 V1.1.2: "Fixed network Multimedia Messaging Service (F-MMS); Part 6: Control strings (service codes) for MMS functions and MMS supplementary services; Dezember 2004. Der Servicecode besteht aus einer numerischen oder alphanumerischen Steuersequenz, deren Anfang durch das Steuerzeichen"*" und deren Ende durch das Steuerzeichen "#" definiert ist. Die Steuersequenz wird also in Form eines Servicecodes übermittelt, in gleicher Weise, wie es bei Festnetz- oder Mobiltelefonen bereits bekannt ist. Die technische Spezifikation ETSI TR 102 314-7 V1.1.2: "Fixed network Multimedia Messaging Service (F-MMS); Part 7: Over-The-Line configuration of F-MMS terminal settings; März 2005, offenbart die Möglichkeit der Übermittlung von Steuerinformationen mittels einer WAP PUSH Nachricht. US 2004/0057403 A1 offenbart ein Verfahren zur Übermittlung einer E-mail-, Fax- oder SMS-Nachricht über ein MMS System mittels einer MMS Nachricht. Die Aufgabe der vorliegenden Erfindung besteht darin, ein Verfahren anzugeben, welches es einem MMS Benutzer erlaubt, eine endgerätespezifische Anpassung eines MMS Dienstes vorzunehmen.

Diese Aufgabe wird erfindungsgemäß durch ein Verfahren gelöst, wie es im Anspruch 1 angegeben ist.

Bevorzugte Ausgestaltungen und Weiterbildungen der Erfindung sind in den abhängigen Ansprüchen angegeben.

Das Verfahren sieht vor, dass der Benutzer eines MMS Dienstes eine Steuerung und benutzerspezifische Anpassung des MMS vornehmen kann, indem er entsprechende Steuerinformationen per MMS an das MMS-System übermittelt. Die Steuerinformationen können entsprechende Benutzer Präferenzen sowie Endgeräteeigenschaften enthalten.

Als "Datencontainer" wird erfindungsgemäß eine originäre MMS Nachricht verwendet, welche die entsprechenden Steuerinformationen enthält.

Diese spezielle MMS Nachricht wird von einem MMS-fähigen Endgerät generiert und zur weiteren Behandlung und Verarbeitung zum MMS-Center, insbesondere zum MMS-Relay Server übermittelt. Der MMS-Relay Server erkennt anhand von bestimmten, in der MMS Nachricht enthaltenen Informationselementen, beispielsweise anhand einer speziellen "Headerinformation", dass es sich um eine systemspezifische MMS Nachricht handelt, welche Steuerinformationen enthält, und verarbeitet die in der Nachricht enthaltenen Steuerinformationen entsprechend.

Es ist zwischen zwei Arten von zu übertragenen Steuerinformationen zu unterscheiden:

Zum einen Steuerinformationen, welche die MMS Eigenschaften des Endgeräts beschreiben. Diese Informationen beschreiben die logischen Eigenschaften des Endgeräts, in Form von unterstützten MIME Types. MIME (Multipurpose Internet Mail Extensions) ist ein Kodierstandard, der die Struktur und den Aufbau von E-Mails und anderer Internetnachrichten festlegt. Ferner findet MIME Anwendung bei der Deklaration von Inhalten in verschiedenen Internetprotokollen, so zum Beispiel in HTTP. Der Standard wird beschrieben in RFC 2045. MIME ermöglicht es, zwischen Sender und Empfänger Informationen über den Typ der übermittelten Daten auszutauschen (Content-Type) und gleichzeitig eine für den verwendeten Übertragungsweg sichere Kodierung (Content-Transfer-Encoding) festzulegen. Es sind mehrere Kodierungsmethoden spezifiziert, die die Übertragung von Nicht-ASCII-Zeichen in Texten sowie von Nicht-texte Dokumenten wie Bildern, Sprache und Video in textbasierten Übertragungssystemen, wie E-Mail, ermöglichen. Die Nicht-Text-Elemente werden beim Versender kodiert und beim Empfänger wieder dekodiert.

Sobald sich die "MMS" Eigenschaften" des Endgerätes ändern z.B. durch Installation von neuer Software, wird nun erfindungsgemäß eine MMS mit Steuerinformationen an das MMS-Relay übermittelt, welche die neuen Eigenschaften des Endgerätes beschreibt. Das MMS-Relay speichert diese Steuerinformation im Benutzerprofil (bzw. der Benutzerprofildatenbank) des zugehörigen Benutzers. Die so hinterlegte Steuerinformation wird dann erfindungsgemäß für alle weiteren, den entsprechenden Benutzer betreffende Aktionen herangezogen, um die Zustellung von Multimedia Nachrichten zu verbessern.

Zum anderen können erfindungsgemäß weitere Steuerinformationen mit dem beschriebenen Verfahren übertragen werden, z.B. Adressen (MSISDN, Email) wohin die Nachricht zusätzlich kopiert oder weitergeleitet werden soll, oder andere Informationen, welche die Behandlung oder das Routing der Nachricht betreffen. Diese so vom Endgerät erzeugten und per MMS zum MMS-Relay Server übertragenen Steuerinformationen werden im Benutzerprofil des zugehörigen Benutzers gespeichert und für alle weiteren Aktionen des Benutzers herangezogen.

Die Erfindung wird nachfolgend anhand eines Ausführungsbeispiels und einer Zeichnung erläutert.

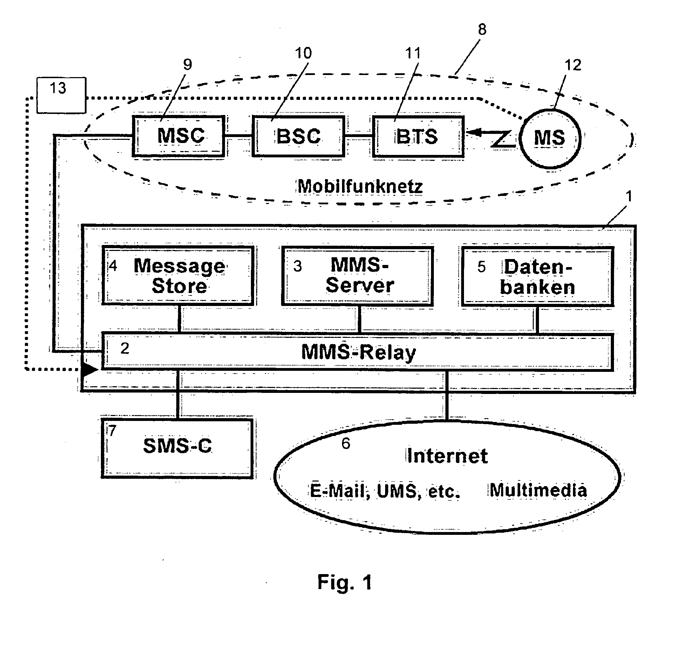

Figur 1 zeigt die beim MMS Dienst beteiligten Komponenten eines mobilen Kommunikationssystems.

Zentraler Bestandteil der Infrastruktur ist das MMS-Center 1, kurz MMSC. Das MMSC 1 empfängt, speichert und versendet die Multimedia-Nachrichten. zusätzlich hat das MMSC 1 Schnittstellen zu anderen Netzwerken und Anwendungen, die Verknüpfungen und Dienste zu anderen Netzwerken bieten, beispielsweise zu anderen MMS Servern, Email Servern, Netzelementen des Mobilfunks (z.B. HLR) usw.

Das MMSC 1 besteht im Wesentlichen aus dem MMS-Relay 2, dem MMS-Server 3, einem Nachrichtenspeicher 4 (Message-Store) und verschiedenen Datenbanken 5. Das MMS-Relay 2 hat Zugriff auf die Datenbanken 5, den MMS-Server 3 und den Nachrichtenspeicher 4. Es unterhält Verbindungen zum Internet 6, anderen Netzbetreibern, dem SMS-Center (SMS-C) 7 sowie dem Mobilfunknetz 8, das in bekannter Weise über netzseitige Komponenten wie Mobilvermittlungsstellen 9 (MSC), Basisstationssteuerungseinrichtungen 10 und Basisstationstransceivereinrichtungen 11 verfügt, um über eine Funkschnittstelle mit einem Endgerät 12 eines Benutzers zu kommunizieren. Über das MMS-Relay 2 werden die MMS-Nachrichten mittels WAP-Protokoll empfangen und gesendet. Im MMS-Relay 2 werden verschiedene Protokolle und Netze unterstützt. Es fungiert als Gateway, um MMS in andere Mitteilungsformate zu wandeln. So kann z. B. eine MMS in eine E-Mail konvertiert werden oder umgekehrt eine E-Mail in eine MMS. Wie SMS wird eine MMS-Mitteilung beispielsweise über das Mobilfunknetz 8 an das MMSfähige Endgerät 12 des Empfängers übermittelt. Dieses geschieht, indem das Endgerät mit Hilfe einer "Notification" über das Vorliegen einer MMS-Mitteilung informiert wird und diese dann vom MMS-Center 1 anfordert. Dieses kann automatisch oder nach vorheriger Bestätigung durch den Benutzer erfolgen.

Die Benutzer können über ihr Endgerät 12 MMS-Nachrichten senden, empfangen, und an andere Benutzer oder E-Mail-Adressen weiterleiten.

Erfindungsgemäß kann nun Benutzer des MMS Dienstes eine Steuerung und benutzerspezifische Anpassung des MMS Dienstes vornehmen, indem er entsprechende Steuerinformationen per MMS an das MMS System übermittelt. Die Steuerinformationen können entsprechende Benutzer Präferenzen sowie Endgeräteeigenschaften enthalten.

Als "Datencontainer" wird erfindungsgemäß eine originäre MMS Nachricht 13 verwendet, die von einem MMS-fähigen Endgerät 12 des Benutzers generiert und zur weiteren Behandlung und Verarbeitung über das Mobilfunksystem 8 zum MMS-Center 1, insbesondere zum MMS-Relay Server 2 übermittelt wird. Der MMS-Relay Server 2 erkennt anhand bestimmter in der MMS Nachricht 13 enthaltenen Informationselementen, beispielsweise anhand einer speziellen "Headerinformation", dass es sich um eine systemspezifische MMS Nachricht handelt, welche Steuerinformationen enthält, und verarbeitet die in der Nachricht enthaltenen Steuerinformationen entsprechend. Beispielsweise kann die MMS Nachricht Steuerbefehle enthalten, die den MMS-Relay Server 2 anweisen, jede für den Benutzer eintreffende MMS Nachricht zusätzlich in eine Email zu konvertieren und als Kopie an eine Email Adresse des Benutzers zu übermitteln.

### Zeichnungslegende

- 1: MMS-Center
- 2: MMS-Relay
- 3: MMS-Server
- 4: Nachrichtenspeicher
- 5: Datenbanken
- 6: Internet, andere Netze
- 7: SMS-Center
- 8: Mobilfunknetz
- 9: Mobilvermittlungsstelle MSC
- 10: Basisstationssteuerungseinrichtung
- 11: Basisstationstransceivereinrichtung
- 12: (Mobiles) Endgerät

## Patentansprüche

1. Verfahren zur Steuerung und benutzerspezifischen Anpassung eines Multimedia Messaging Dienstes in Mobilkommunlkatlonssystemen, wobei der Benutzer des Multimedia Messaging Dienstes die Steuerung und benutzerspezifische Anpassung vornimmt, indem er mittels eines Endgeräts (12) entsprechende Steuerinformationen an das MMS System (1) übermittelt, wobei die Steuerinformationen mittels eines MMS-fähigen Endgeräts (12) als eine MMS Nachricht (13) übermittelt werden, wobei die die Steuerinformationen enthaltende MMS Nachricht (13) von dem MMS fähigen Endgerät (12) generiert und zur weiteren Behandlung und Verarbeitung zu einem MMS-Relay Server (2) des MMS-Systems übermittelt wird, wobei der MMS-Relay Server anhand bestimmter, in der MMS Nachricht (13) enthaltener Informationselemente erkennt, dass es sich um eine systemspezifische MMS Nachricht handelt, welche Steuerinformationen enthält, und die in der MMS Nachricht (13) enthaltenen Steuerinformationen entsprechend verarbeitet,
**dadurch gekennzeichnet,**
**dass** die Steuerinformationen Daten enthalten, welche die vom Endgerät (12) unterstützten MIME Types beschreiben.

2. Verfahren nach Anspruch 1, **dadurch gekennzeichnet, dass** die Steuerinformationen entsprechende Benutzer Präferenzen und /oder Endgeräteeigenschaften enthalten.

3. Verfahren nach einem der vorhergehenden Ansprüche, **dadurch gekennzeichnet, dass**, sobald sich die vom Endgerät (12) unterstützten MIME Types ändern, eine MMS Nachricht (13) mit Steuerinformationen an das MMS-Relay (2) übermittelt wird, welche die neuen vom Endgerät (12) unterstützten MIME Types beschreibt.

4. Verfahren nach einem der vorhergehenden Ansprüche, **dadurch gekennzeichnet, dass** die Steuerinformationen Adressdaten enthalten, welche die Zustellung und Weiterleitung von MMS Nachrichten steuern, oder andere Informationen, weiche die Behandlung oder das Routing von MMS Nachrichten betreffen.

5. Verfahren nach einem der vorhergehenden Ansprüche, **dadurch gekennzeichnet**, das die an das MMS-Relay (2) übermittelten Steuerinformation in einer Benutzerprofildatenbank (5) des Benutzers gespeichert werden.

6. Verfahren nach einem der vorhergehenden Ansprüche, **dadurch gekennzeichnet, dass** die in der Benutzerprofildatenbank (5) hinterlegten Steuerinformationen für alle weiteren, den entsprechenden Benutzer betreffenden Aktionen herangezogen werden, um die Zustellung von MMS Nachrichten zu steuern.

## Claims

1. Method for the control and user-specific adaptation of a multimedia messaging service in mobile communications systems, wherein the user of the multimedia messaging service performs control and user-specific adaptation by forwarding corresponding control information to the MMS system (1) by means of a terminal (12), wherein the control information is forwarded as an MMS message (13) by means of an MMS-capable terminal (12), wherein the MMS message (13) containing the control information is generated by the MMS-capable terminal (12) and forwarded to an MMS relay server (2) of the MMS system for further treatment and processing, wherein the MMS relay server, with the aid of certain items of information contained in the MMS message (13), detects that a system-specific MMS message containing control information is involved, and processes the control information contained in the MMS message (13) accordingly, **characterised in that** the control information contains data which describe the MIME types supported by the terminal (12).

2. Method according to claim 1, **characterised in that** the control information contains corresponding user preferences and/or terminal properties.

3. Method according to one of the preceding claims, **characterised in that**, as soon as the MIME types supported by the terminal (12) change, an MMS message (13) is forwarded with control information to the MMS relay (2) which describes the new MIME types supported by the terminal (12).

4. Method according to one of the preceding claims, **characterised in that** the control information contains address data which control the delivery and forwarding of MMS messages, or other information concerning the treatment or routing of MMS messages.

5. Method according to one of the preceding claims, **characterised in that** the control information forwarded to the MMS relay (2) is stored in a user profile database (5) of the user.

6. Method according to one of the preceding claims, **characterised in that** the control information deposited in the user profile database (5) is used for all further actions concerning the corresponding user in order to control the delivery of MMS messages.

## Revendications

1. Procédé pour la commande et l'adaptation, spécifique à l'utilisateur, d'un service de messagerie multimédia dans des systèmes de communication mobile, étant précisé que l'utilisateur du service de messagerie multimédia procède à la commande et à l'adaptation spécifique à l'utilisateur en transmettant à l'aide d'un terminal (12) des informations de commande correspondantes au système MMS (1), que les informations de commande sont transmises à l'aide d'un terminal MMS (12) sous forme de message MMS (13), que le message MMS (13) contenant les informations de commande est généré par le terminal MMS (12) et est transmis à un serveur relais MMS (2) du système MMS en vue d'être géré et traité ultérieurement, et que le serveur relais MMS reconnaît à l'aide d'éléments d'information définis contenus dans le message MMS (13) qu'il s'agit d'un message MMS spécifique au système qui contient des informations, et traite en conséquence les informations de commande contenues dans le message MMS (13),
**caractérisé en ce que** les informations de commande contiennent des données qui décrivent les types MIME supportés par le terminal (12).

2. Procédé selon la revendication 1, **caractérisé en ce que** les informations de commande contiennent des préférences d'utilisateur et/ou des caractéristiques de terminal correspondantes.

3. Procédé selon l'une des revendications précédentes, **caractérisé en ce que** dès que les types MIME supportés par le terminal (12) changent, un message MMS (13) avec des informations de commande est transmis au relais MMS (2), lequel message MMS décrit les nouveaux types MIME supportés par le terminal (12).

4. Procédé selon l'une des revendications précédentes, **caractérisé en ce que** les informations de commande contiennent des données d'adresse qui commandent le dépôt et la retransmission des messages MMS, ou d'autres informations qui concernent le traitement ou l'acheminement de messages MMS.

5. Procédé selon l'une des revendications précédentes, **caractérisé en ce que** les informations de commande transmises au relais MMS (2) sont stockées dans une banque de données de profil d'utilisateur (5) de l'utilisateur.

6. Procédé selon l'une des revendications précédentes, **caractérisé en ce que** les informations de commande stockées dans la banque de données de profil d'utilisateur (5) sont utilisées pour toutes les actions ultérieures concernant l'utilisateur correspondant, afin de commander le dépôt de messages MMS.
